Europäisches Patentamt

European Patent Office

Office européen des brevets

(11) Publication number: **0 399 980**
**A2**

## EUROPEAN PATENT APPLICATION

(21) Application number: **90850204.0**

(22) Date of filing: **22.05.90**

(51) Int. Cl.5: **B01D 53/34**

(30) Priority: **23.05.89 ZA 893870**

(43) Date of publication of application:
**28.11.90 Bulletin 90/48**

(84) Designated Contracting States:
**GB SE**

(71) Applicant: **DE BEERS INDUSTRIAL DIAMOND DIVISION (PROPRIETARY) LIMITED**
**8th Floor 45 Main Street**
**Johannesburg Transvaal(ZA)**

(72) Inventor: **Trenton, Barry Graham**
**15 Libertas Cross Street, President Ridge**
**Randburg, Transvaal(ZA)**
Inventor: **Andrews, Joanne Fredrica**
**P.O. Box 1556, Halfway House, 1685**
**Transval(ZA)**

(74) Representative: **Henningsson, Gunnar et al**
**AWAPATENT/Bergling & Sundbergh,**
**Sveavägen 13-15, Box 7645**
**S-103 94 Stockholm(SE)**

(54) **Removal of NOx fumes.**

(57) NOx fumes are removed from a gas stream by cooling the gas stream at a cooling station (16) in a duct (10), passing the cooled gas stream through a fog of fine water droplets produced at a fogging station (18), and then removing from the gas stream the entrained water droplets. The preferred droplet size is $120 \times 10^{-6}$ m or less. The preferred gas and water temperature is around 4°C or 5°C respectively.

REMOVAL OF NOx FUMES

## BACKGROUND TO THE INVENTION

THIS invention relates to the removal of NOx (nitrous oxide) fumes from gas streams.

NOx fumes are produced as waste in many different chemical plants, for instance plants in which nitric acid is used to dissolve metals. The removal of these toxic fumes has always proved to be a major problem.

## SUMMARY OF THE INVENTION

According to the present invention, NOx fumes are removed from a gas stream by cooling the gas stream, causing it to flow through a fog of clean water droplets and then removing the water droplets from the stream.

The fog may, for instance, be produced in the form of a spray by fogging jets which are commercially available from, for instance, Monitor Engineering. Typically, the droplet size in the resultant fog will be around $120 \times 10^6$ m or less.

The water used to form the fog will preferably have a low temperature of the order of $11°C$ or less, most preferably $5°C$.

The invention extends to apparatus for the removal of NOx fumes from a gas stream, the apparatus comprising a duct through which the gas stream can be caused to flow and having a cooling station at which the gas stream is cooled, means in the duct, downstream of the cooling station, for forming a fog of clean water droplets and means in the duct, downstream of the fog-forming means, for removing water droplets from the gas stream.

Preferably, the fog-forming means comprising a series of fogging jets arranged to project a fine spray of water droplets in the upstream direction.

## BRIEF DESCRIPTION OF THE DRAWINGS

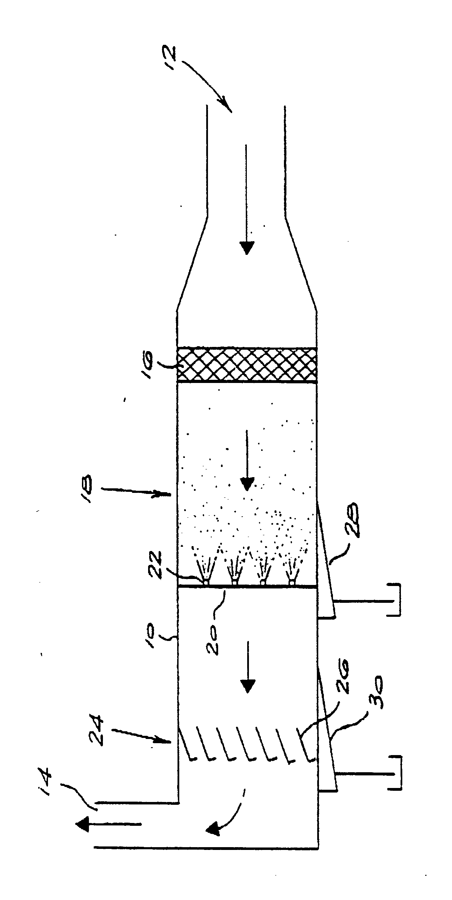

The invention will now be described in more detail, by way of example only, with reference to the accompanying drawing which illustrates apparatus of the invention diagrammatically.

## DESCRIPTION OF A PREFERRED EMBODIMENT

The drawing shows a duct 10 having an upstream inlet 12 and a downstream exhaust outlet 14. In use of the apparatus, a gas stream, typically an air stream, containing NOx fumes is introduced at the inlet. The gas stream first encounters a cooling coil 16. The coil 16 may, for instance, be an evaporative cooling coil forming part of an external refrigeration circuit. Having passed through the cooling coil, and having had its temperature reduced, typically to about $4°C$, the gas stream moves towards a fogging station indicated generally with the numeral 18. The fogging station comprises an array of conduits, illustrated schematically by the numeral 20, fitted with fogging jets 22, typically of the kind which are commercially available from Monitor Engineering. The jets are chosen to produce small water droplets having a size of $120 \times 10^{-5}$ m or less and it will be noted that the jets are orientated in the upstream direction, i.e. in opposition to the direction of gas flow through the duct 10.

The fogging jets create a fine fog or mist of water droplets which extends across substantially the entire cross-section of the duct 10. It is important that the clean water which is used to form the fog be clean. Clean tap water has been found to be satisfactory. Prior to fogging the water is cooled, typically to a preferred temperature of around $5°C$.

The various parameters, such as gas stream flow rate, water flow rate, velocity of gas stream flow, length of tube and so forth are chosen to give a sufficiently long residence time, i.e. time of contact between the gas stream and the droplets of the fog, for absorption of at least a major part of the NOx content of the gas stream by the water droplets. Entrained water droplets are carried downstream by the gas stream.

Having passed through the fogging station, the gas stream flows through a conventional mist eliminator 24 comprising a series of baffle plates 26 which effectively reduce the velocity of the gas stream and cause the water droplets to drop out of the gas stream.

The duct includes collection outlets 28 and 30 arranged respectively beneath the fogging station and mist eliminator to collect water at these sites.

The gas stream, cleaned to a large degree of NOx fumes, leaves the duct 10 through the exhaust outlet 14.

## EXAMPLE

In a practical example, using a duct 10 such as that depicted in the drawing, the initial concentration of NOx, in this case $NO_2$, in a bulk air inlet stream to the duct was 1800 ppm and the velocity of the air stream was in the range 2.5 to 3ms⁻¹. The air was introduced at a rate of 2000m³h⁻¹. Tap water for forming the fog at the fogging station was cooled to a temperature of about 8°C and was fed to the fogging jets at a rate of 1,1m³ h¹. The fogging jets operated at a pressure of 7 x 10⁵ Pa and the length of the fog through which the gas stream was obliged to pass was of the order of 3m. The gas stream was cooled to a temperature of 8°C by the cooling coil.

The exhausted gas was tested and it was found that the NOx concentration had dropped by a factor of between 6 and 8 times, i.e. the final concentration was between 225 and 300ppm, indicating that the apparatus had caused substantial NOx removal.

## Claims

1. A method of removing NOx fumes from a gas stream characterised by the steps of cooling the gas stream, creating a fog of clean water droplets, causing the cooled gas stream to flow through the fog and then removing entrained water droplets from the stream.

2. A method according to claim 1 characterised in that the fog is created with a droplet size of 120 x 10⁶ m or less.

3. A method according to claim 1 or claim 2 characterised in that the gas stream is cooled to a temperature of around 4°C prior to causing it to flow through the fog.

4. A method according to any one of the preceding claims characterised in that the fog is created from water having a temperature of 11°C or less.

5. A method according to claim 4 characterised in that the fog is created from water having a temperature of around 5°C.

6. A method according to any one of the preceding claims characterised in that fogging jets (22) are used to create the fog.

7. A method according to claim 6 characterised in that the fogging jets (22) are oriented to form a fog in opposition to the direction of flow of the gas stream.

8. A method according to any one of the preceding claims characterised by the steps of collecting water droplets which are not entrained by the gas stream as it flows through the fog and of separately collecting the entrained water droplets.

9. An apparatus for removing NOx fumes from a gas stream, characterised in that the apparatus comprises a duct (10) through which the gas stream can be caused to flow, a cooling station (16) in the duct (10) at which the flowing gas stream is cooled, means (18) in the duct (10) downstream of the cooling station for creating a fog of clean water droplets through which the gas stream is obliged to flow, and further means (24) in the duct (10) downstream of the fog-forming means (18) for removing entrained water droplets from the gas stream.

10. An apparatus according to claim 9 characterised in that the fog-forming means (18) comprises a series of fog-forming jets (22) selected to form a fog composed of water droplets having a size of 120 x 10⁻⁶ m or less.

11. An apparatus according to claim 10 characterised in that the fog-forming jets (22) are oriented to form a fog of water droplets in opposition to the direction of flow of the gas stream through the duct (10).

12. An apparatus according to any one of claims 9 to 11 characterised by a cooling coil (16) at the cooling station which is chosen to cool the gas stream to a temperature of around 4°C.

13. An apparatus according to any one of the preceding claims characterised by means (28) for collecting water droplets which are not entrained in the gas flow and means (26,30) for separately collecting the entrained water droplets that are removed from the gas stream.